# EUROPEAN PATENT SPECIFICATION

(11) **EP 2 438 408 B1**
(45) Date of publication and mention of the grant of the patent: **26.02.2020**
(21) Application number: 10783035.8
(22) Date of filing: 04.06.2010
(51) Int. Cl.: G01G 19/414, A47F 10/06, G01G 23/42, A47F 1/035, G06K 7/10

(54) **METHOD, ARRANGEMENT, EQUIPMENT AND SYSTEM FOR CATERING SERVICES**
VERFAHREN, ANORDNUNG, VORRICHTUNG UND SYSTEM FÜR CATERING-DIENSTE
PROCÉDÉ, AGENCEMENT, ÉQUIPEMENT ET SYSTÈME POUR SERVICES DE RESTAURATION

(30) Priority: 05.06.2009 FI 20095626
(43) Date of publication of application: 11.04.2012
(73) Proprietor: MEALVATION OY, 50190 Mikkeli (FI)
(72) Inventor: TUIKKANEN, Riitta, FI-50600 Mikkeli (FI); TASKINEN, Teija, FI-50170 Mikkeli (FI); HARJU, Pertti, FI-50190 Mikkeli (FI)
(74) Representative: Helke, Kimmo Kalervo
(86) International application number: PCT/FI2010/050462
(87) International publication number: WO 2010/139862

(56) References cited:
- DE-A1- 10 045 516
- DE-A1- 10 045 516
- JP-A- 2007 071 647
- JP-A- 2007 094 655
- US-A1- 2001 013 539
- US-A1- 2006 231 616
- US-A1- 2007 254 080
- US-B1- 7 432 454
- US-B1- 7 432 454

## Description

The invention relates to a method for catering services, wherein
- at least one food placed for serving in a serving unit is selected for forming a meal portion,
- a quantity of the food selected for the meal portion is weighed at the serving unit in connection with the selection, in which a weighing process is controlled such that at each food
   - before selecting the food to the meal portion, a weighing functionality is initialized,
   - finishing of the selection of the food is detected and the corresponding weighing result is stored,
- information related to the selected food and/or the formed meal portion is determined using the content information and the quantitative information of the selected food.

The invention also relates to an arrangement, a system and a computer program product.

Various serving units are known in prior art from which food can be distributed based on a self-service principle, for example. These types of units are used in institutional canteens, for example, but also as restaurant buffets. Chests or similar serving means, for example, from which it is possible to select dishes for forming a meal portion, can be replaceably adapted to the units.

A problem related to the serving units known in prior art, when considering forming of a meal portion, for example, is the information scarcity regarding the dishes selected to the portion. This applies both to the quantity of dishes selected to the portion and their content. The content of dishes can be understood widely in this context. For example, it may include the nutritional/energy content of dishes as well as individualized information on raw materials and additives.

A solution known in prior art for eliminating the above-mentioned information scarcity is proposed in US patent 7,432,454 B1. Here a solution is proposed in which a scale and a remote reader integrated to a tray are utilized. The remote reader identifies the dish selected to a portion and the nutritional information linked thereto, and the scale weighs the quantity of the dish added to the portion to be formed on a plate. However, this solution causes problems, for example, in situations when a lot of people are transacting at the same time in distribution line systems and in which the smoothness of assembling a portion is therefore particularly important. The smoothness of assembling is essentially influenced by the number of actions required from the portion assemblers and also by the fact how experienced the assemblers are relative to the arrangement. In addition, a scale integrated to a tray is insensitive and prone to errors as regards careless action of the portion assembler.

Besides the above disadvantage, it is also problematic to identify the target of each meal portion and to associate the identification information with a certain meal portion. When the target cannot be identified, nor can it be assigned individualized information related to the portion to be assembled, let alone guidance related to assembling. In any case, forming a meal portion should be as effortless and simple as possible to the assemblers. Moreover, assembling a portion should take place as smoothly as possible so as to avoid forming excessive queues in the line system, which would delay the access to the dining step itself.

One reference concerning the prior art is disclosed in DE-patent application publication number DE 100 45 516 A1. The object of this invention is to provide a method for catering services, which method is simple as regards the user interaction and enables to define the content of a meal portion and/or the dishes selected thereto both quantitatively and with respect to the nutritional/raw material content. The invention also relates to a corresponding arrangement and system. The characteristic features of the method, arrangement and system according to the invention are set forth, respectively, in claims 1, 5, 8 and 9.

With the invention, many kinds of remarkable advantages are achieved. Firstly, with the invention, the assembler of a meal portion, who assembles the portion by selecting to it at least one dish, is not required to perform additional actions compared to a traditional buffet system, for example. With the invention, a meal portion can still be assembled as effortlessly as it has taken place traditionally. Yet, using the invention, it is possible to accurately follow up the quantity and content of dishes selected to a meal.

With the invention, also the target of each portion is easily and effortlessly identifiable and thus each assembling event and portion can be unambiguously associated with the correct diner. Also, identification of the target of the portion or weighing of the dishes selected to the portion, do not require special actions from the assembler of the portion, but even this can take place actually without substantial user interaction.

The technical implementation of the serving unit included in the arrangement is also very simple. The functionality that carries out the invention can be integrated to serving units in their manufacturing stage, for example, or also afterwards by retrofitting. It does not require much structural variation from the serving units but it actually suits them as such. Besides the assemblers of a portion, the serving unit and the functionality enabling the invention are mainly invisible towards the serving/kitchen personnel as well. Thus its utilization does not require invention-specific actions or equipment expertise either from the personnel. Other characteristic features of the invention become evident from the appended claims, and other advantages achievable with the invention are discussed in a wider extent in the description.

The invention, which is not limited by the embodiments set forth below, is now described in more detail by making reference to the enclosed drawings, in which
- Figure 1: is a basic diagram of a serving unit according to the invention,
- Figure 2: is a coarse basic diagram showing an application example for integrating a weight sensor to a serving unit,
- Figure 3: shows an application example of a system utilizing the serving unit according to Figure 1, and
- Figure 4: is an application example of the method shown in a flow chart.

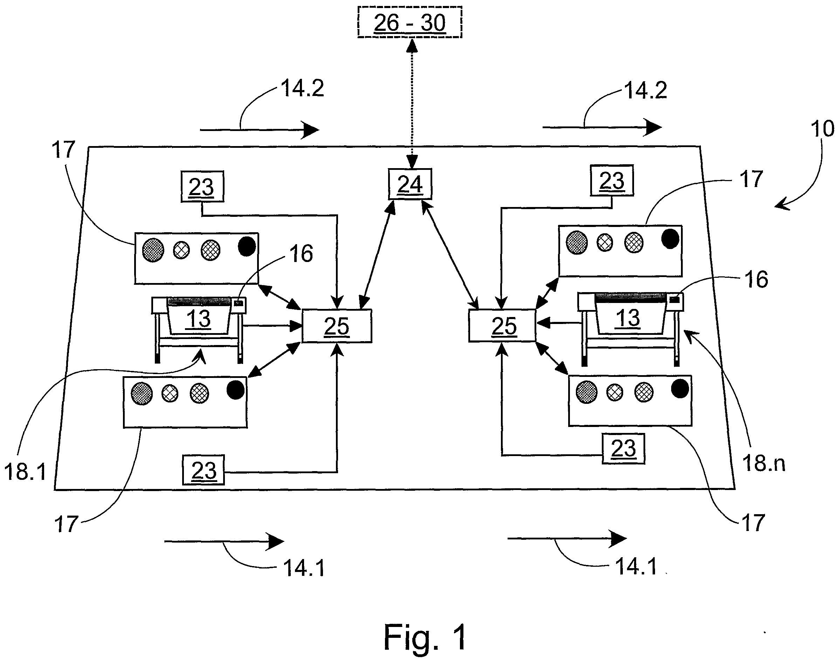

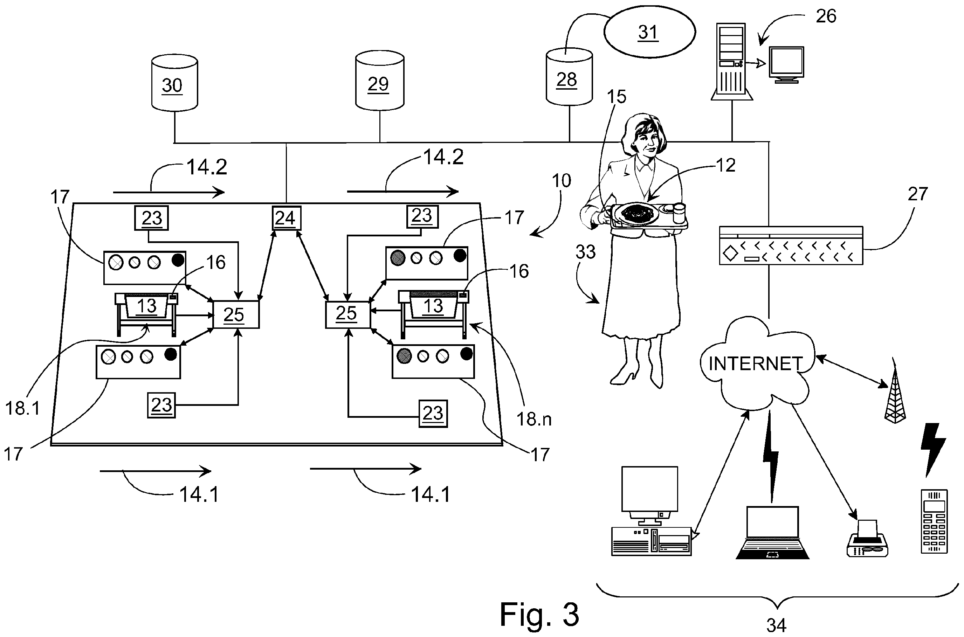

Figure 1 illustrates the basic diagram of an example of a serving unit 10 included in the arrangement. The distribution line system may include at least one serving unit 10 with a basic design known as such, for example, from which unit it is possible to assemble a meal portion 12 (Figure 3) by selecting thereto one or more dishes 11 from the serving unit 10. In Figure 1 the serving unit 10 is straight but it can naturally also be curved, for example. The serving unit 10 according to Figure 1 is provided with assembly lines 14.1, 14.2 on both sides running from left to right, but the serving unit 10 can also be one-sided having thus only one assembly line. The serving unit 10 can have feet and an optional protective cover in a manner known as such (not shown). The serving unit 10 can be moveable or, alternatively, integrated to fixed restaurant furniture.

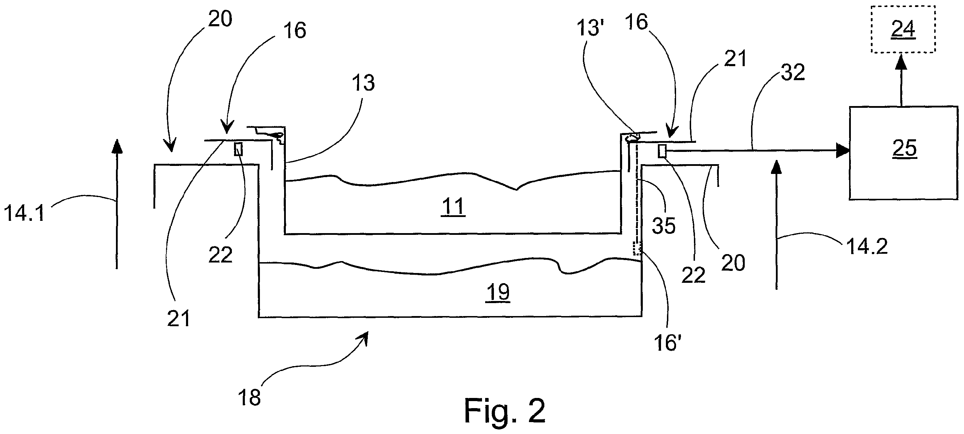

Between the feet and an optional protective cover of the serving unit 10, one or more successive locations 18.1, 18.n are arranged in the direction of the assembly line 14.1, 14.2 for the pans 13 of the serving unit 10, or more generally for the corresponding serving means for dishes 11. The locations can be, for example, recesses made in a table 10, chests 18.1,..., 18.n. For the locations 18.1, ..., 18.n, heating or cooling, for example, can be arranged in a manner known as such, which can be implemented as a water bath 19, for example (Figure 2). On both sides of the chest locations 18.1, ..., 18.n, or even between them, edge levels 20, such as a tray track or center islands (Figure 2) can be present. The number of chests 18.1, ..., 18.n can be one, two or even three at one selection position of the assembly line 14.1, 14.2.

Serving means, such as pans 13 or containers, for dishes 11 can be replaceably adapted in the chest locations 18.1, ..., 18.n. The pans 13 or containers can be loaded with dishes 11 for serving. The pans 13 and containers can also be as such known in prior art.

A particular feature of the distribution line system, more specifically of its serving unit 10, is that it is equipped with at least one scale 16 and remote reader devices 23. According to an embodiment, the table 10 can have several scale elements 16 of which at least one element is adapted for each distribution pan 13 or container. The scale elements 16 allow determining the mass of the pans 13 and containers and thereby also the quantity 32 of the dish 11 selected therefrom to one meal portion 12.

Figure 2 shows a cross-section of one basic application example for arranging a weight sensor system 16 in the vicinity of a serving unit 10. According to an embodiment, the weighing scale functionality 16 can have been arranged in scale frames 21 that are adapted or adaptable in the chest locations 18, for example, in which frames the pans 13 or similar can be replaceably placed. When selecting food 11 to a portion 12, it is possible to measure the mass and the change of mass of the serving pan 13 with a sensor arrangement 22, including at least one sensor, which sensor arrangement is located between the scale frame elements 21 and the pans 13. In the sensor system, it is possible to apply, for example, strain gauge elements, pressure sensors 22 or sensors whose operation is based in one way or another on the measurement of bending. The temperature resistance of the weight sensor 22 can be adapted according to the operating temperature of the chests 18. As an example, a range of 40 - 100°C can be mentioned. An isolating element can also be present between a pan 13 and a sensor 22 for eliminating the disadvantage possibly caused to the sensor 22 by heat and moisture.

The frames 21 can have been dimensioned to comply with standard chest locations 18, for example, in which case standard serving pans 13 with possible serving utensils can be positioned therein (not shown). The frame 21 can have a closed or an open periphery. At its simplest, the frame can be a weight sensor beam alone. The weighing frame 21 can be integrated to the serving unit 10 already during its manufacturing stage, for example, or to the chests 18 of serving units 10 that are already in use.

Besides the size of the chest location 18, the frames 21 can have been dimensioned according to the size of the pans 13, for example. Then the frame construction 21 can be located between the chest location 18 and an edge collar 13' of a serving device 13, for example. Replacing a pan 13 is very easy in the construction. Fixtures known as such can function as the chest locations 18 of the table and as pans 13 and it is not necessary to modify them at all for carrying out the invention. The same weighing frame elements 21, located under the ends of the pans 13, for example, can be used with pans of various sizes.

The serving unit 10 further includes intelligence which is used, for example, to control the action of the assembler of a portion 12 and also the selection of a dish 11 to the portion 12, such as its weighing event, and by which the diner 33, or more generally, the target of the portion 12, taking food 11 to a portion 12 from the assembly line 14.1, 14.2 at each pan 13 (Figure 3), can additionally be specifically identified. Instead of a diner 33, the target of a portion 12 can be a patient, for example, for whom a portion 12 is formed by selecting dishes 11 to the portion by the catering service personnel, for example. Thus the diner 33 and the person belonging to the catering service personnel can be assemblers of the portion 12. Below is a description of one application example of intelligence adapted to the serving unit 10 in which reference is made to Figure 1 which shows a basic example of the functional parts of the unit 10 and the mutual data transfer connections between these.

As shown in Figure 1, the serving unit 10 additionally includes at least one reader device 23 adapted to the unit 10 or in the vicinity thereof, more generally remote reader devices for detecting the target of a portion 12, for example, as well as for controlling the alternation of an assembly of a portion 12 and the weighing process by remote identification 23, 15 at each dish 11. The reader device 23 can be, for example, an RFID reader 23 known as such. The reader device 23 can be integrated to the edge 20 of the table 10, for example, or even to the scale frame 21 itself (Figure 2).

According to Figure 1, the arrangement can further include at least one signalling device 17 adapted to the serving unit 10 and controllable with the remote reader devices 23. This signalling device can function as a semaphore for controlling the assembly action of portions 12, for example. A semaphore unit 17 can be arranged at each serving pan 13, for example. It can guide the assembler of a portion unambiguously to use the line system in such a way that it is possible to carry out nutritional follow-up without additional control actions required from the assembler of the portion 12.

According to an embodiment, the semaphore 17 can be composed of three indicator lights installed in the vicinity of each serving pan chest 18.1, ..., 18.n located in the scale frame 21.

The indicator lights can be - from left to right - red, yellow and green, for example. The semaphore 17 can additionally have a simple user interface for entering information, such as one push button for accident situations.

For guiding, it is naturally also possible to use guiding text or screen displays or even speech guidance by which it is possible to control the formation of a portion 12. A numerical display (not shown), which shows the energy content of a dish 11 selected to a portion 12, for example, is not necessary as regards the control of action, but since it is advantageous and information-providing, it can be easily connected to a unit controller 25 described later. An advantage here is that with the invention, it is possible to give feedback to the diners already in connection with the dining situation and even in connection with the formation of a portion 12 itself. This makes the invention very educational and motivating. If the default state of the display is stored in the information of an identified diner, the energy display can be switched off if the diner does not intend to act with awareness of his/her energy intake, for example. If it is desired to control the nutritional intake of a diner in the line system, the display can show, at the beginning of the selection of a dish 11, the quantity of food intended to be taken (numerically e.g. in grams or graphically in a bar) and the diner can take a dish 11 from a chest 13 until the display goes down to zero. Thus the invention enables, besides monitoring, also guiding the assembly of a portion. Here, too, the possibilities are surprisingly versatile for forming and distributing information.

Operating according to a semaphore 17 as described based on colours is easy to learn by the portion assemblers. This is because it is not necessary to separately teach the basic operational logic of semaphores known from the traffic lights to the portion assemblers. The meaning of the lights can be indicated in a fixed manner in the vicinity of the lights with a label text, for example. The detection of error and attention statuses can be improved by connecting an auditive signal to these statuses. According to an embodiment, even an alarm signal can be given if a portion assembler, for example, takes a dish unsuitable to the target of the portion (e.g. allergy). The meaning of the lights and the formation of a portion 12 in the line system is described somewhat later in the specification.

The arrangement can also include a control interface 24 adapted in the vicinity of the serving unit 10, which interface includes at least one control unit 25. The control interface 24 can be used, for example, for arranging data transfer between the serving unit 10 and an external information system 26 - 30. The scale 16 of each serving unit 10 is connected to a unit controller 25 located in the vicinity of the control interface 24 of the line system and such a unit controller is arranged for each pan 13. The unit controller 25 can control, in the various chest locations 18.1, ..., 18.n of the serving unit 10, for example, the weighing event, alternation of transactions and/or generally the action of the assemblers of a portion 12 based on the background information of the target 33 of a portion 12. In addition, the unit controller 25 has one or more controller/RFID reader units 23 connected thereto. For identification, RFID identity or payment cards, which are used in other systems as well, can be used in the limits allowed by the compatibility of RFID readers 23. For example, the data connections connected to the line system are configured and enabled with the control interface unit 24 of the line system shown in Figure 1 and it is used to set the line system to the operational state when filling it with food.

Connected to the control interface unit 24, there is a user interface with which the use of the line system is managed and which can be also used, if necessary, to enter the nutritional value data of the food of the line system. In addition, the unit 24 can take care of calculating the proportions of the energy contents and the nutritive substances of the portions taken from the line system according to the data transferred thereto and the events of taking food weighed by the scales 16. It can transfer the data 31 of diner-specific events to be stored by the system in cases when the diner is a user of the buffet system. It is thus possible to define information 31 related to a meal portion 12 formed by selecting dishes 11 in connection with the serving unit 10, and more specifically, in connection with the event of selecting a dish 11 to a portion 12, without the need of separately weighing the food 11 already selected to a plate, for example, after the selection. Such a decentralized functionality is advantageous, for example, in that the data transfer connection between the unit 10 and the information system 26 - 30 need not be always active. Moreover, individualized information 31 can be presented to the diner immediately in connection with the assembly of the meal 12.

The controller 24, the semaphore 17 and optional display units can be located in separate cases which can be added to the fittings. For example, they can be a part of the serving unit 10, or alternatively, they can be modules of their own located in the vicinity of the serving unit 10. In addition, the functional parts described, such as the unit controllers 25 and the interface unit 24 of the line system, can be implemented as functional entities of logic control units comprising one or more microcontrollers.

One or more serving units 10 can form a buffet system. The units 10 can be located physically anywhere in the world in which case they are connected to the system by a data communication link, for example.

As shown in Figure 3, the invention also includes an information system entity of which the serving unit 10 forms one information producing part. Via its unit controller 24, the serving unit 10 can be in contact with a server entity 26, 27, which can maintain and run several information systems 28 - 30.

A first example of information systems may be an event database 28. For storing diner-specific information 31 collected from the line system, the line system is in contact with the event-specific storage media of the buffet system, which storage media can be named as "Collected nutritional content events by each diner DB", for example. The server 27 of the buffet system can supply the information 31 of this database 28 in a desired form to other information systems and/or to the Internet, wherein the information can be viewed with devices 34 connected thereto.

To be able to use the line system in a way described below to guide or store the nutritional information 31 of a meal 12 selected by a diner 33 from the line system, the line system is in contact with the information 29 of the diners identified by means of RFID tags 15 or corresponding remotely readable identifications, for example. The database 29 includes at least user information. In addition, it may include a so-called diner profile associated with the user information, according to which profile the line system can control the action of the diners 33 and thus the assembly of a portion 12 utilizing remote identification 15, 23, For example, a diner profile can include, as the background information of the target 33 of a portion 12, allergies and other restrictions of the target, or an earlier diner profile. In other words, the action of the assembler 33 of a portion 12 is controlled based on remote identification 15, 23 and the user information of the target 33 of the portion 12. At the minimum, the database. 29 includes one basic user which can be anonymous, such as a "lunch guest", and the relative profile based on which the system can follow the energy content of the portion 12 selected, for example.

In addition to the databases 28 - 30 arranged for the operation of the line systems and the storage of the results, the system also includes a computer that enables processing and managing the information 31 produced by the line system, more generally, system management 26. In addition, the server entity can include a sharing server 27 for collected information with which server the information can be distributed to devices 34 via the Internet. If required, the management computer 26 of the system can also remotely manage the controller interfaces 24 of the line systems.

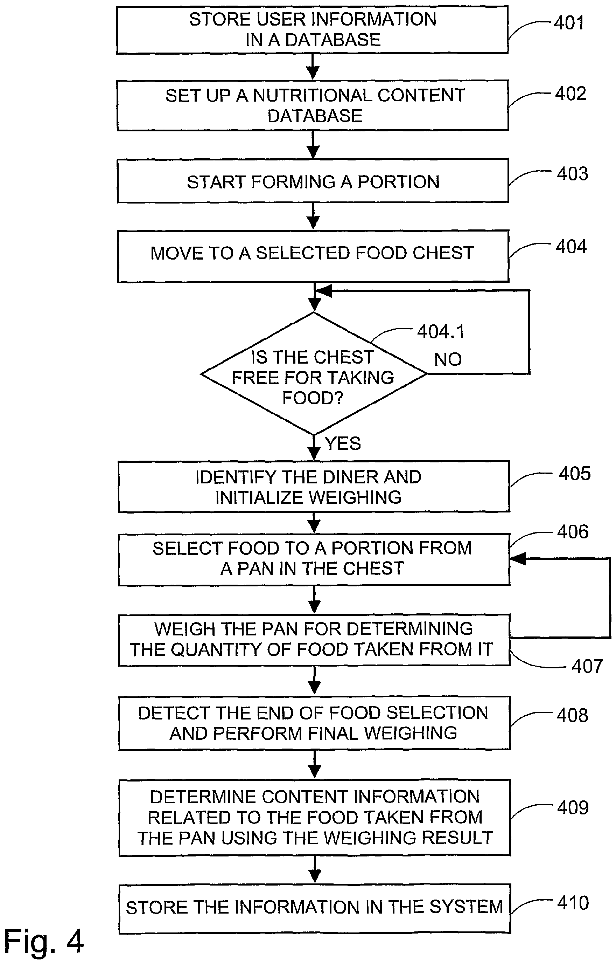

An embodiment of the method is described below making reference to the system diagram of Figure 3 and the flow chart of Figure 4. The serving unit 10 included in the system is shown two-sided in the system diagram. The assemblers 33 of a meal portion can form portions 12 from both assembly lines 14.1, 14.2 of such a unit 10, in this case starting from the left side of the serving unit 10 and proceeding horizontally towards the right side of the unit 10. From one serving chest unit 10 equipped with a weighing function and including scale frames 21 that are integrated to the vicinity of at least part of the chests 18.1, ..., 18.n, food 11 can be taken from two or more sides from the pans 13 that are reachable from the assembly lines 14.1, 14.2. For this, RFID reader/guiding units 23, 17 are connected to the controller 25 of the chest unit 10 for identifying and guiding several successive assemblers 33 of a portion 12 proceeding along the assembly lines 14.1, 14.2, from different selection directions. However, several selection events cannot be performed completely simultaneously from the same pan 13, because pans 13 set in the chests 18.1, ..., 18.n are weighed between the selections for determining the quantity 32 of the dish 11 selected to each individual portion 12 at each chest 18.1, ..., 18.n.

The serving unit of one assembly line 14.1 can be otherwise identical except that only one RFID reader/guiding unit has been connected to the scale frame controller. In this case food can be simultaneously taken from all chests of the unit 10.

Before the method and system can be utilized in the way intended, the system can be initialized by entering in it information that is necessary for the operation of the method. As step 401, individualized personal data of diners including possible individualized user profiles can be stored in the database 29 of the buffet system. Based on this information, the system can control and monitor the desired activities and the reception of nutritive substances of the targets of the meal portions. According to an embodiment, contents obtainable from already existing other databases can be used as the identification data of the users. Thus the information related to a diner can be retrieved to the system from existing databases of a company personnel, a restaurant chain, or persons entitled to use a canteen of a recreational resort, for example. Similarly, information stored for the purpose of a student card or student status can be connected to this buffet system user database 29.

The initialization can also include, as one step 402, setting up of a content information database of dishes 30. Here the content information can comprise, for example, energy, vitamin and nutritional content information for the dishes 11 as well as information on raw materials and/or additives. The content information of various dishes 11 for calculating the events of use of the control interface 24 can be stored therein using various interfaces. The information can be transferred by programming, for example, from various information systems 30 used in the food production. The information can be programmed from the "system management computer" 26 to the control interface 24 or it can also be retrieved from tables used in a computer or copied from a text to the control interface 24. The information, for the follow-up, of the basic nutritive substances of the dishes 11 in the chests 18.1, ..., 18.n can also be entered from a simple user interface of the control interface 24 located in the line system itself when preparing the line system for the use of diners. The possibilities for arranging the nutritional content information are thus very versatile. It is essential that the system knows which dish 11 is available in each chest location 18.1, ..., 18.n.

Information about the content of the dishes 11 to be stored in the database 30 can be contents of basic nutritive substances, energy contents, diet types (meat/fish/vegetable), or information about allergizing nutritive substances or additives, for example.

Before a meal portion 12 can be formed from the dishes 11 placed for serving in the serving unit 10, at least one or possibly more dishes 11 have been placed for serving in the unit 10, and for each dish, the nutritional content and energy values, more generally the content information 30 of the dish 11, are known. The dishes 11 can be placed for serving using replaceable serving means 13, for example.

When beginning the assembly of a meal portion 12 from the dishes 11 placed for serving in the serving unit 10 (step 403), the assembler 33 of the portion 12 can select a tray including plates, on which tray the portion 12 composed of several dishes 11 is meant to be formed and from which it is also meant to be eaten. In addition, an identification 15 of the target 33 of the meal portion 12 to be assembled can be placed on the tray or similar in such a way that it is readable in connection with the unit 10 with a reader device 23 without substantial user interaction. For performing the follow-up of nutritional information of a meal portion 12, an RFID identification 15, an ID card, a tag or similar belonging to the diner 33, i.e. the target of the portion, is kept in certain regions beside the cold food or warm food chests 18.1, ..., 18.n while proceeding in the line system and assembling a portion 12. These regions can have been marked, for example, in the unit and/or the trays used therein. Possibilities for arranging an identification tag 15 can be multiple. For example, it can be fixed to the trays used in a canteen or attached thereto with a self-adhesive label, for example, or a diner/client can have the identification data with him/her in his/her ID card.

Subsequently, in step 404, one moves to the dish pan 13 selected in the unit 10 for forming a portion 12 from the successively selected pans 13 of the assembly line 14.1, 14.2. If there are no diners at the pan 13 adapted in the chest location 18.1, ..., 18.n which is in the selection turn, a yellow light may blink in the controller 25 indicating that the relative serving pan 13 is available and food 11 can be selected to a portion 12 from it. A yellow light can also blink in the semaphore 17 in case the line system is used by a diner who is not a system user (the diner does not have an RFID tag with him/her) .

The meal portions 12 to be formed are individualized and each one is linked to a specific diner 33. Once the RFID reader 23 has read the tag 15 brought by the diner 33 to the pan 13 and the system has identified this individual (step 405), a yellow light is lit in the semaphore 17 of the pan 13. Thus the individual 33 or at least the meal portions 12 formed, more generally the target of meal portions 12, are identified in connection with each serving device 13 and thus also with the dish 11, as remote identification 15, 23. Remote identification 23 can also be used to perform the initialization of the scale functionality, which is a part of the weighing process. According to an embodiment, the initialization can involve, for example, storing of the current scale reading that is valid before starting the selection of the food 11.

If the system does not identify the diner 33, a red light blinks in the semaphore 17. The diner 33 can try to identify him-/herself once again or take food without identifying him-/herself, in which case the portion 12 will not be registered.

When the dish 11 is available from the pan 13 for the identified diner 33, a green light is lit in the semaphore 17. The green light indicates that the identification and scale initialization event has been registered and the action can be continued with selecting of a dish 11 placed for serving to the portion 12 (step 406). While the green semaphore light is lit, an identified diner 33 can take more of the same dish 11, put food 11 taken in excess back to the pan 13 from the portion 12, or move to the following dish 11 in the assembly line 14.1, 14.2, or to move to dining.

When an identified diner 33 selects food 11 from a pan 13 and the mass of the pan 11 changes as the food 11 is being taken, a green light blinks. Thus the quantity 32 (mass) of at least one dish 11 selected to a meal portion 12 is determined by weighing it in the serving unit 11 in connection with the assembly of the meal portion 12, and more specifically, in connection with the selection of a dish 11 from a pan 13. In other words, according to an embodiment, the quantity of a dish 11 taken from a pan 13 can be weighed with the scale frame 16 (step 407) even in real-time in connection with the selection event of the dish 11. Such on-line weighing ensures that at least some weighing result 32 is obtained also in such a case that the user 33 would, for example, interrupt the assembly of a portion 12 contrary to the operating instructions of the line system, or if an incident occurs in the selection. In addition, the assembler 33 of a portion 12 can put food 11 back to a pan 13 in case he/she accidentally took it excessively. According to an embodiment, the quantity of the dish 11 selected to a meal portion 12 is determined based on a change in the gross mass of the serving means 13, i.e. the displacement of food 11 from a pan 13, which is determined by means of a scale functionality 16 when selecting dishes 11 to a portion 12 from the serving means 13. In step 407, the assembler of a portion 12 can also be provided guidance according to the diner profile of this individual, for example.

When the desired quantity of food 11 has been selected to the portion 12, the diner 33 can move away from the RFID reading region 23 of the pan 13 that was in the selection turn, and consequently, the tag 15 of this diner 33 will no more be readable by the reading device 23 of this pan 13 (step 408). This is an indication of that taking of food 11 from this pan 13 is detected as completed and consequently, it is possible to store, as part of the weighing process controlled by remote identification 15, 23, the weight of the pan 13 for determining the food 11 selected therefrom to the portion 12 concerned. In other words, the weighing event and storing of the weighing results 32 can surprisingly be controlled by remote identification 15, 23 without substantial user interaction. Remote identification can thus trigger the pan 13 to final weighing, which is performed, for example, in step 408 after it has been identified that the selection of food 11 to the portion 12 has been ended. Final weighing is a fast operation and thus does not much slow down advancing of the assemblers 33 of a portion 12 in the assembly line 14.1, 14.2. The pan 13 is stably located in its chest location 18.1, ..., 18.n and thus the weighing result does not vary much, but it is very stable even immediately after ending the selection of food 11 from the pan 13.

Subsequently, content information 31 related to the selected dish 11 and/or the meal portion 12 formed is determined using the nutritional information and/or energy values 30 of the selected dish 11 and the quantitative information 32 based on weighing (step 409). The green light of the semaphore 17 switches off and only a green light is lit for a moment indicating that the nutritional information 31 of the quantity of food taken from the pan 13 by the identified diner 33 has been determined and stored in the system (step 410). While the green semaphore light is lit, an optional numerical display of the chest 18.1, ..., 18.n can show the energy content of the portion amount taken by the diner 33 from the pan 13 after the identification. After the green light has switched off, the controller 25 returns to the basic state, a yellow light blinks in the semaphore 17 and the selection event from this pan 13 of the following diner in the line 14.1 can start (step 405) and the diner 33 who has transacted a moment ago at this pan 13 can move to the following pan (step 404). Thus the assembly of the meal portion 12 and specifically the selection of dishes 11 is alternated at each dish 11 in the assembly line 14.1. This alternation can also be based on remote identification 15, 23 of diners.

If a serving unit 10 includes at least two assembly lines 14.1, 14.2 sharing at least one serving device 13, and if in a two-sided unit 10, selection of food 11 is performed at a certain pan 13 from one assembly line 14.1, this is indicated to the diner 33 in the other assembly line 14.2 in step 404.1, and as an indication of this, a red light can be lit in the semaphore 17 of the other assembly line 14.2. The red light advises not to take food from the pan 13 connected to the relative semaphore 17 and to wait for one's own turn. Thus the formation of a meal portion 12 and specifically, the selection of each dish 11, is alternated between the assembly lines 14.1, 14.2, which alternation can also be based on remote identification 15, 23. Another possibility for providing alternation between the assembly lines 14.1, 14.2 may be a serving utensil shared by the pan 13.

A numerical display specific for each chest can display the amount of food taken from the pan 13 and the total quantity of the meal 12 formed from the unit 10 by displaying both in turns at an interval of a few seconds. It is easy to learn that the lower value is specific to the pan, while the higher one represents the total food quantity of the meal 12 taken from the unit. An optional text or screen display can show, in addition to the pan-specific and total situation, more detailed information on the portion 12, such as the percentages of the main nutritive substances and/or other nutritional contents as well as information on the status of the diet of a diner 33, or instructions for following the nutritional targets set.

Depending on the dimensions of the line system, it is useful that, in addition to the pan-specific basic displays, it has a text or screen display providing more extensive information about the meal formed at its most important pan (the last pan, for example).

Based on his/her username, a registered diner can follow his/her nutritional content situation concerning the portions taken from the unit that is stored in the system by means of devices 34 connected to the Internet, or the system can send the information after the events, based on the user's diner profile, to the diner's email or mobile device, or buffet line system canteens can have a separate information unit from which the diner 33 can view and print his/her information and make changes in his/her user settings by identifying him-/herself with his/her tag 15.

The nutritional information related to the specific dining event can be presented to all line system users in the cutlery return point, for example. When a tray used in the line system is brought to the RFID reader device of the return point, the display associated therewith provides the nutritional information or a printout of the meal 12 that was last assembled on this tray. Other possibilities for giving feedback include a cash receipt, a mobile station (SMS), or speech feedback in connection with the return of a tray, for example. For registered users, the information 31 related to dining has been stored in the system database 28 and can be followed up there.

Information required for the normal basic use of anonymous diners can be included in and managed from the control interface, or it can be set up in files of the system's management computer.

For "normal" users dining in the buffet line system that are not registered in the buffet system, it is also possible to store different diner profiles in the control interface. When coming to eat, a diner can select for his/her use trays equipped with different number and/or colour codes. When using a coded tray, the line system guides to collect a portion that complies with a certain profile. A tray with a red 900 kcal label guides to select a meat/pasta portion of 900 kcal from the line system, a tray with a green label guides to select a vegetable meal, a pink label guides to a suitable amount of carbon hydrates, a "400 tray" guides to any food of 400 kcal, etc. The user information of such an anonymous diner is not stored in the system, but the line system guides the diner to collect nutritional contents included in one meal from the available food, and the information related to the selected meal can be presented to the user in connection with the return of the tray, for example.

To avoid that food (casserole with minced meat and pasta, for example) sticking to the serving utensils used in the unit 10 affects the results, specific stands can be used in the line system for the serving utensils. In this case the diner has to make sure that the serving utensils are in a serving chest or on the stand associated therewith, before and after taking the food. Appropriate positioning of the serving utensils can be taken into account, for example, in the design of the weighing chest and/or in the construction of the line system. In addition, instructions for this can be provided for the diner in the line system. According to an embodiment, before selecting a dish 11 to a meal portion 12, the chest scale 16 can be initialized, i.e. zeroed, or at least the current weight of the pan 13 can be stored always at each diner upon his/her identification. Then the personnel can change serving utensils or add or remove (the same) food in the serving chests of the line system normally without any system control actions. If dishes in the pans 13 are changed in such a way that their nutritional values change, the data must of course be updated to the control interface of the line system as well.

For accidents, such as if food is wasted by dropping it while taking it, one should press the correction button of the semaphore 17 in which case the previous weighing condition remains significant and the incorrect result is not registered.

If a meal portion, after assembling the portion and before dining, knocks over or remains otherwise uneaten, the condition registered in the system can be corrected so that the condition of the taking of food from the same pan less than five minutes later remains significant. Thus one should be able to wait this period of time before retaking.

This guard period thus makes it possible that, if a diner does not want to eat food taken from a chest (contains blue cheese), during the guard period the diner can go to the line system chest containing the uneaten dish and identify him-/herself again without taking food, and this zero result will be stored in the system. Zeroing or correcting a portion taken from the line system is also possible for a diner who is registered in the user database with other active modification actions by logging in to the system later, within the access rights assigned to this individual.

With the invention, a restaurant service provider also easily receives accurate information on the consumption. An application for this can be placing of the payment criteria of meals to the use of the nutritional contents of the line system, if desired. Moreover, the invention enables optimizing the selection order of dishes 11 in the unit 10 in an advantageous way.

Still another exemplary method for implementing the weight sensor system can be at least one bar-type scale element 16' adapted in a chest of a serving device location 18, 18.1, ..., 18.n. This principle is shown in Figure 2 with dash lines. The scale element bar 16' which is elongated in the horizontal direction can be connected to a table frame, for example, from the first end, and to a pan 13 from the second end, such that the scale element 16' can freely bend due to the weight of the pan 13. Thus the scale element 16' supports the pan 13 and a threshold below the scale element 16' enables its bending. The scale element 16' can be connected to the table frame, for example, at a distance from the bottom of the pan 13, below it, on the bottom of the chest 18. In this case the scale element 16' is connected to the pan 13 with a vertical bar 35, more generally an elongated support element, which contacts with the collar 13' of the pan 13, for example.

The collar 13' of the pan 13 can be provided with a sleeve or similar aligning reception design, a counterpart, for the bar 35. Each chest 18 can be provided with, for example, two scale elements 16', one at each end of the chest 18. A scale element 16' adapted inside a chest 18 enables weighing even heavy pans 13 when full. In addition, with a standardized scale contact system of the pan 13, accurate alignment of the pans 13 is achieved relative to the scale elements 16' and thus also accurate weighing. Furthermore, placing pans 13 in the chests does not require, from the kitchen personnel, specific consideration to the scale functionality located in the chest 18 as the counterpart and the support element 35 automatically align to each other when placing a pan 13 in the chest 18.

In nursing homes, old people's homes, hospitals and other similar medical institute environments, the arrangement guides to assemble patient portions without special training. A guiding system eliminates the risk of human error which is present in portions assembled by a diet cook based on memory. Special accuracy is required in the assembly of a patient portion because an incorrect type of portion can even lead to a danger to life (e.g. milk allergy of a child -> anaphylactic reaction). An RFID reader can be used, in addition to (confirmation) or even instead of the serving unit, only beside a patient's bed. Thus a correct portion can be reliably provided to the right patient. In this case, an RFID tag 15 can be placed in a patient's bed or in his/her wrist, for example.

Controlling the weighing process by means of identification 15, 23 makes the method and arrangement according to the invention particularly functioning. Along with this, the assemblers 33 of a portion 12 are required less experience than before for transacting in the arrangement. In addition, minimum user interaction, which is achieved with the identification, makes the assembly of portions 12 particularly straightforward. This is of a primary importance at lunch times, for example, when distribution lines can become jammed by the clients assembling portions. Thus, with the method according to the invention, the arrangement does not delay the access of the diners to the dining step, which is essential, because only a limited time is usually reserved for having lunch. Another significant advantage achieved with the identification 15, 23 is guiding of the assemblers 33 of portions 12 both in transacting in the line system (e.g. alternation) and in forming a portion 12 (e.g. contents of a portion). Due to the identification 15, 23, the assembly of a portion 12 can be guided based on information stored about the target 33 of the portion 12.

Remote identification can be understood very widely in the context of the invention. Some non-limiting examples of remote identification may be traditional RFID detection technologies or those under development, known local detection technologies based on mobile devices or those under development, as well as various biological detection methods. Still another method for performing identification may be bar code type solutions. The possibilities for implementing identification are thus very versatile.

The invention also relates to a computer program product including computer program means stored in a device readable by a computer for arranging catering services. The computer program means are adapted to define and provide information corresponding to the desired information need and related to the formed and individualized meal portion 12 and/or the dish 11 selected thereto, to the assembler 33 or the portion 22. An example of this can be the quantity of a dish 11 that corresponds to a desired nutritional content. This can be made known when the nutritional content per mass unit of the dish 11 is known. Another example of the information could be the price.

It is apparent that the above description and the figures related thereto are intended only for illustrating the present invention. The invention is thus not limited merely to the above described embodiments or those set forth in the claims, but many different variations and modifications of the invention, which are possible within the inventional idea specified in the appended claims, will be apparent for one skilled in the art.

## Claims

1. A method for catering services, wherein
- at least one food (11) placed for serving in a serving unit (10) is selected for forming a meal portion (12),
- a quantity of the food (11) selected for the meal portion (12) is weighed at the serving unit (10) in connection with the selection, in which a weighing process is controlled such that at each food (11)
- before selecting the food (11) to the meal portion (12), a weighing functionality is initialized,
- finishing of the selection of the food (11) is detected and the corresponding weighing result is stored,
- information (31) related to the selected food (11) and/or the formed meal portion (12) is determined using the content information (30) and the quantitative information (32) of the selected food (11), **characterized in that**
- the content information (30) is nutritional information and/or energy values of the selected food (11),
- a diner (33) of the meal portion (12) to be formed is identified at each food (11) by remote identification (15, 23) arranged to the serving unit (10),
- assembling of meal portions (12) is controlled based on the information (29) of the diner (33) identified at each food (11) by remote identification (15, 23) arranged to the serving unit (10),
- the weighing process is controlled by remote identification (15, 23) arranged to the serving unit (10) such that at each food (11)
- before selecting the food (11) to the meal portion (12), the weighing functionality is initialized with remote identification (15, 23),
- finishing of the selection of the food (11) is detected by remote identification (15, 23) and the corresponding weighing result is stored.

2. A method according to claim 1, wherein foods (11) are placed for serving with serving means (13), **characterized in that** the quantity of the food (11) is determined based on the change in the gross mass of the serving means (13).

3. A method according to claim 2, **characterized in that** the quantity of the food (11) is determined in real-time in connection with the selection.

4. A method according to any of claims 1 - 3, **characterized in that** the information (31) related to the selected food (11) and/or the formed meal portion (12) is determined in connection with the serving unit (10) from which the selection of the food (11) is performed.

5. An arrangement for catering services, the arrangement including a serving unit (10), to which serving means (13) can be replaceably adapted for foods (11) to be selected therefrom for forming a meal portion (12), and which arrangement includes
- a scale functionality (16, 16') arranged to the serving unit (10) by means of which the quantity of the food (11) is arranged to be weighed in connection with the selection in a weighing process in which at each food (11)
- before selecting the food (11) to the meal portion (12), the scale functionality (16, 16') is arranged to be initialized,
- finishing of the selection of the food (11) is arranged to be detected and the corresponding weighing result is arranged to be stored,
- remote reader means (23) arranged to the serving unit (10),
**characterized in that** the remote reader means (23) is arranged to
- identify a diner (33) of a meal portion (12) from a remotely readable identification (15),
- control the weighing process,
and in which the weighing process is arranged to be controlled by remote identification (15, 23) including said remote reader means (23) such that at each food (11)
- before selecting the food (11) to a meal portion (12), the weighing functionality is arranged to be initialized by the remote identification (15, 23),
- finishing of the selection of the food (11) is arranged to be detected by the remote identification (15, 23) and the corresponding weighing result is arranged to be stored
and the serving unit (10) is equipped with a unit controller (25), which is arranged to control at least one of the weighing event, alternation of transactions, and assembly of a meal portion (12) based on its diner (33).

6. An arrangement according to claim 5, **characterized in that** the scale functionality (16) is arranged to a frame construction (21) which is adaptable in a serving device location (18, 18.1, ..., 18.n) of the serving unit (10) and the frame construction (21) is adaptable between a serving device location (18, 18.1, ..., 18.n) and the collar (13') of a serving device (13) .

7. An arrangement according to claim 5 or 6, **characterized in that**
- the scale functionality (16') is arranged to the chest part (18) of a serving device location (18, 18.1, ..., 18.n),
- the scale functionality (16) and the serving device (13) are connected to each other with an elongated support element (35), for which a counterpart is arranged in the serving means (13).

8. A system for arranging catering services, **characterized in that** the system includes at least one arrangement according to any of claims 5 - 7, which is arranged to a data transfer connection with a server computer entity (26, 27) for creating information (31) related to a formed and individualized meal portion (12) and/or a food (11) selected thereto.

9. A computer program product including computer program means stored in a means readable with a computer for arranging catering services, **characterized in that** the computer program means are arranged to be executed for carrying out a method according to any of claims 1 - 4 and are adapted to define information, corresponding to the desired information need, related to a formed and individualized meal portion (12) and/or a food (11) selected thereto.

## Patentansprüche

1. Ein Verfahren für Catering-Dienste, wobei
- mindestens eine Speise (11) zum Servieren in einer Serviereinheit (10) platziert wird, um eine Mahlzeitenportion (12) zu bilden,
- eine für die Mahlzeitenportion (12) ausgewählte Menge der Speise (11) in der Serviereinheit (10) in Verbindung mit der Auswahl gewogen wird, bei der ein Wiegevorgang gesteuert wird, sodass bei jeder Speise (11)
- vor Auswahl der Speise (11) für die Mahlzeitenportion (12) eine Wiegefunktion initialisiert wird,
- die Verarbeitung der Auswahl der Speise (11) festgestellt und das entsprechende Wiegeergebnis gespeichert wird,
- die Informationen (31) bezüglich der ausgewählten Speise (11) und/oder der gebildeten Mahlzeitenportion (12) mit Hilfe der inhaltlichen Informationen (30) und der quantitativen Informationen (32) der ausgewählten Speise (11) ermittelt werden,
**dadurch gekennzeichnet, dass**
- die inhaltlichen Informationen (30) Nährwertinformationen und/oder Brennwerte der ausgewählten Speise (11) sind,
- ein Speisender (33) der zu bildenden Mahlzeitenportion (12) bei jeder Speise (11) per zu der Serviereinheit (10) eingerichteter Fernidentifikation (15, 23) identifiziert wird,
- die Zusammenstellung der Mahlzeitenportionen (12) basierend auf den Informationen (29) des bei jeder Speise (11) per zu der Serviereinheit (10) eingerichteter Fernidentifikation (15, 23) identifizierten Speisenden (33) gesteuert wird,
- der Wiegevorgang per zu der Serviereinheit (10) eingerichteter Fernidentifikation (15, 23) gesteuert wird, sodass bei jeder Speise (11)
- vor Auswahl der Speise (11) für die Mahlzeitenportion (12) die Wiegefunktion mit Fernidentifikation (15, 23) initialisiert wird,
- die Verarbeitung der Auswahl der Speise (11) durch Fernidentifikation (15, 23) festgestellt und das entsprechende Wiegeergebnis gespeichert wird.

2. Ein Verfahren nach Anspruch 1, mit dem Speisen (11) zum Servieren mit Serviermitteln (13) platziert werden, **dadurch gekennzeichnet, dass** die Menge der Speise (11) basierend auf der Veränderung der Gesamtmasse der Serviermittel (13) bestimmt wird.

3. Ein Verfahren nach Anspruch 2, **dadurch gekennzeichnet, dass** die Menge der Speise (11) in Echtzeit in Verbindung mit der Auswahl festgestellt wird.

4. Ein Verfahren nach einem der Ansprüche 1 - 3, **dadurch gekennzeichnet, dass** die Informationen (31) bezüglich der ausgewählten Speise (11) und/oder der gebildeten Mahlzeitenportion (12) in Verbindung mit der Serviereinheit (10), von der die Auswahl (11) der Speise erfolgt, bestimmt werden.

5. Eine Anordnung für Catering-Dienste, die eine Serviereinheit (10) umfasst, an die Serviermittel (13) für Speisen (11), die davon zur Bildung einer Mahlzeitenportion (12) ausgewählt werden, austauschbar angepasst werden können und die umfasst
- eine Skalenfunktion (16, 16'), angeordnet an der Serviereinheit (10), durch die die Menge der Speise (11) zum Wiegen in Verbindung mit der Auswahl in einem Wiegevorgang angeordnet wird, bei dem bei jeder Speise (11)
- vor Auswahl der Speise (11) für eine Mahlzeitenportion (12) die Skalenfunktion (16, 16') zur Initialisierung angeordnet wird,
- die Verarbeitung der Auswahl der Speise (11) zur Feststellung angeordnet und das entsprechende Wiegeergebnis zur Speicherung angeordnet wird,
- Fernlesemittel (23) an der Serviereinheit (10) angeordnet sind,
**dadurch gekennzeichnet, dass** die Fernlesemittel (23) angeordnet sind zur
- Identifikation eines Speisenden (33) einer Mahlzeitenportion (12) von einer aus der Ferne ablesbaren Identifikation (15),
- Steuerung des Wiegevorgangs,
und in dem der Wiegevorgang zur Steuerung durch Fernidentifikation (15, 23) angeordnet wird, einschließlich der genannten Fernlesemittel (23), sodass bei jeder Speise (11)
- vor Auswahl der Speise (11) für eine Mahlzeitenportion (12) die Wiegefunktion durch Fernidentifikation (15, 23) zur Initialisierung angeordnet wird,
- die Verarbeitung der Auswahl der Speise (11) zur Feststellung durch die Fernidentifikation (15, 23) angeordnet und das entsprechende Wiegeergebnis zum Speichern angeordnet wird
und die Serviereinheit (10) mit einer Einheitensteuerung (25) ausgestattet ist, die angeordnet ist, um mindestens ein Wiegeereignis, den Transaktionenwechsel und die Zusammenstellung der Mahlzeitenportion (12) basierend auf ihrem Speisenden (33) zu steuern.

6. Eine Anordnung nach Anspruch 5, **dadurch gekennzeichnet, dass** die Skalenfunktion (16) angeordnet ist an einer Rahmenkonstruktion (21), die anpassbar ist an einer Serviergerätposition (18, 18.1, ..., 18.n) der Serviereinheit (10) und die Rahmenkonstruktion (21) anpassbar ist zwischen einer Serviergerätlokation (18, 18.1, ..., 18.n) und dem Manschette (13') eines Serviergeräts (13).

7. Eine Anordnung nach Anspruch 5 oder 6, **dadurch gekennzeichnet, dass**
- die Skalenfunktion (16') angeordnet ist am Brustteil (18) einer Serviergerätposition (18, 18.1, ..., 18.n),
- die Skalenfunktion (16) und das Serviergerät (13) miteinander mit einem verlängerten Stützelement (35) verbunden sind, für das in den Serviermitteln (13) ein Gegenstück angeordnet ist.

8. Ein System zum Anordnen von Catering-Diensten, **dadurch gekennzeichnet, dass** das System mindestens eine Anordnung nach den Ansprüchen 5 - 7 enthält, das zu einer Datenübertragungsverbindung mit einer Servercomputereinheit (26, 27) zum Erstellen von Informationen (31) bezüglich einer gebildeten und individualisierten Mahlzeitenportion (12) und/oder einer dazu ausgewählten Speise (11) angeordnet ist.

9. Ein Computerprogramm, das Computerprogrammhilfsmittel umfasst und in einer Weise gespeichert ist, die mit einem Computer zum Anordnen von Catering-Diensten gelesen werden kann, **dadurch gekennzeichnet, dass** die Computerprogrammhilfsmittel angeordnet sind, um zur Anwendung einer Verfahren nach einem der Ansprüche 1 - 4 ausgeführt zu werden, und angepasst sind, um Informationen zu definieren, entsprechend dem gewünschten Informationsbedarf, bezüglich einer gebildeten und individualisierten Mahlzeitenportion (12) und/oder einer dazu ausgewählten Speise (11).

## Revendications

1. Un procédé pour les services de restauration, où :
- au moins un aliment (11) placé en vue d'être servi dans un buffet (10) est sélectionné pour former une partie de repas (12),
- une quantité d'aliments (11) sélectionnée pour la partie de repas (12) est pesée au niveau du buffet (10) en lien avec la sélection, dans laquelle un processus de pesée est commandé de sorte que pour chaque aliment (11)
- une fonctionnalité de pesée soit initialisée avant la sélection de l'aliment (11) pour la partie de repas (12),
- la fin de la sélection de l'aliment (11) soit détectée et le résultat de pesée correspondant soit enregistré,
- des informations (31) liées à l'aliment sélectionné (11) et/ou à la partie de repas formée (12) sont déterminées à l'aide des informations sur le contenu (30) et des informations quantitatives (32) concernant l'aliment sélectionné (11),
**caractérisé en ce que**
- les informations sur le contenu (30) correspondent aux informations nutritionnelles et/ou aux valeurs énergétiques de l'aliment sélectionné (11),
- un consommateur (33) de la partie de repas (12) qui sera formée est identifié pour chaque aliment (11) via l'identification à distance (15, 23) présente sur le buffet (10),
- l'association des parties de repas (12) est commandée à partir des informations (29) sur le consommateur (33) identifié pour chaque aliment (11) à l'aide de l'identification à distance (15, 23) présente sur le buffet (10),
- le processus de pesée est commandé par l'identification à distance (15, 23) présente sur le buffet (10) de sorte que pour chaque aliment (11)
- la fonctionnalité de pesée soit initialisée à l'aide de l'identification à distance (15, 23) avant la sélection de l'aliment (11) pour la partie de repas (12),
- la fin de la sélection de l'aliment (11) soit détectée par l'identification à distance (15, 23) et le résultat de pesée correspondant soit enregistré.

2. Un procédé conformément à la revendication 1, où les aliments (11) sont placés en vue d'être servis avec des bacs gastronome (13), **caractérisé en ce que** la quantité d'aliments (11) est déterminée en fonction de la variation de la masse brute des bacs gastronome (13).

3. Un procédé conformément à la revendication 2, **caractérisé en ce que** la quantité d'aliments (11) en lien avec la sélection est déterminée en temps réel.

4. Un procédé conformément à l'une des revendications 1 à 3, **caractérisé en ce que** les informations (31) en lien avec l'aliment sélectionné (11) et/ou la partie de repas formée (12) sont déterminées en rapport avec le buffet (10) depuis lequel la sélection d'aliment (11) est réalisée.

5. Un agencement pour des services de restauration, l'agencement incluant un buffet (10), pour lequel les bacs gastronome (13) peuvent être adaptés de manière interchangeable aux aliments (11) à sélectionner dans celui-ci afin de former une partie de repas (12), et ledit agencement incluant
- une fonctionnalité de balance (16, 16') présente sur le buffet (10) au moyen de laquelle la quantité d'aliments (11) peut être pesée en relation avec la sélection dans le cadre d'un processus de pesée dans lequel, pour chaque aliment (11),
- la fonctionnalité de balance (16, 16') est conçue pour être initialisée, avant la sélection de l'aliment (11) pour la partie de repas (12),
- la fin de la sélection de l'aliment (11) est conçue pour être détectée et le résultat de pesée correspondant est prévu pour être enregistré,
- des outils de lecture à distance (23) prévus pour le buffet (10),
**caractérisé en ce que** les outils de lecture à distance (23) sont conçus pour
- identifier le consommateur (33) d'une portion de repas (12) à partir d'une identification lisible à distance (15),
- commander le processus de pesée,
et dans lesquels le processus de pesée est conçu pour être commandé par l'identification à distance (15, 23) comprenant lesdits outils de lecture à distance (23) de sorte que pour chaque aliment (11)
- la fonctionnalité de pesée soit conçue pour être initialisée à l'aide de l'identification à distance (15, 23) avant la sélection de l'aliment (11) pour la partie de repas (12),
- la fin de la sélection de l'aliment (11) soit conçue pour être détectée par l'identification à distance (15, 23) et le résultat de pesée correspondant est prévu pour être enregistré et le buffet (10) est doté d'un dispositif de commande (25), qui est destiné à contrôler au moins un des événement de pesée, l'alternance des transactions et l'association des parties de repas (12) en fonction de son consommateur (33).

6. Un agencement conformément à la revendication 5, **caractérisé en ce que** la fonctionnalité de balance (16) est conçue pour une structure de cadre (21) pouvant être adaptée à un emplacement d'équipement de service (18, 18.1, ..., 18.n) du buffet (10), et la structure de cadre (21) peut être adaptée entre un emplacement d'équipement de service (18, 18.1, ..., 18.n) et le collier (13') d'un équipement de service (13).

7. Un agencement conformément à la revendication 5 ou 6, **caractérisé en ce que**
- la fonctionnalité de balance (16') est disposée dans le caisson (18) d'un emplacement pour dispositif de service (18, 18.1, ..., 18.n),
- la fonctionnalité de balance (16) et l'équipement de service (13) sont reliés l'un à l'autre par le biais d'un élément de soutien allongé (35), pour lequel un équivalent est prévu dans les bacs gastronome (13).

8. Un système pour l'agencement de services de restauration, **caractérisé en ce que** le système inclut au moins un agencement conformément à l'une des revendications 5 à 7, qui est doté d'une connexion de transfert de données avec une entité informatique de serveur (26, 27) pour la création d'informations (31) concernant une partie de repas formée et individualisée (12) et/ou un aliment (11) sélectionné dans celle-ci.

9. Un progiciel informatique incluant des outils de programme informatique enregistré de manière à être lu par un ordinateur pour l'agencement de services de restauration, **caractérisé en ce que** les outils de programme informatique sont conçus afin d'être exécutés pour la réalisation d'un procédé conformément à l'une des revendications 1 à 4 et sont adaptés pour définir des informations, correspondant aux informations recherchées et nécessaires, concernant une partie de repas formée et individualisée (12) et/ou un aliment (11) sélectionné dans celle-ci.
